# EUROPÄISCHE PATENTSCHRIFT

(11) **EP 1 212 234 B1**
(45) Veröffentlichungstag und Bekanntmachung des Hinweises auf die Patenterteilung: **11.01.2006**
(21) Anmeldenummer: 00974321.2
(22) Anmeldetag: 14.09.2000
(51) Int. Cl.: B62J 6/00

(54) **FAHRTRICHTUNGSANZEIGER**
INDICATOR
CLIGNOTANT

(30) Priorität: 14.09.1999 DE 19943886
(43) Veröffentlichungstag der Anmeldung: 12.06.2002
(73) Patentinhaber: Guido Kellermann Produktentwicklung & Handel, 52072 Aachen (DE)
(72) Erfinder: KELLERMANN, Guido, 52072 Aachen (DE)
(74) Vertreter: Castell, Klaus
(86) Internationale Anmeldenummer: PCT/DE2000/003202
(87) Internationale Veröffentlichungsnummer: WO 2001/020222

(56) Entgegenhaltungen:
- DE-A- 2 750 828
- DE-A- 3 035 005
- DE-A- 19 907 551
- DE-C- 894 363
- FR-A- 2 608 733
- FR-A- 2 704 937
- GB-A- 834 060
- GB-A- 1 362 364
- JP-A- 62 216 881
- US-A- 4 320 906
- US-A- 5 160 192
- US-A- 5 388 035
- US-A- 5 617 303

## Beschreibung

Die Erfindung betrifft einen Fahrtrichtungsanzeiger, insbesondere für Motorräder. Hierbei weist der Fahrtrichtungsanzeiger eine Leuchte auf, die in einem Gehäuse angeordnet ist und durch eine Fensteröffnung des Gehäuses nach außen leuchten kann. Hierbei wird in das Gehäuse selbststrahlendes Licht durch einen der Fensteröffnung gegenüberliegend angeordneten Spiegel zurückgeworfen, um die Gesamtleuchtkraft des Fahrtrichtungsanzeigers zu verstärken. Der Spiegel weist hierbei eine Spiegelkrümmung auf, die in der Regel eine Fokussierung bedingt. Dieses ist jedoch nicht zwingend notwendig, die Spiegelkrümmung kann beispielsweise auch eben ausgebildet sein.

Derartige Fahrtrichtungsanzeiger sind beispielsweise aus der DE 199 07 551 Al bekannt. Diese beschreibt einen Fahrtrichtungsanzeiger für Motorräder, mit einer in einem Gehäuse angeordneten Leuchte, die durch eine Fensteröffnung des Gehäuses nach außen leuchten kann, und mit einem der Fensteröffnung gegenüberliegend angeordnetem Spiegel mit einer Spiegelkrümmung, der an sich freitragend innerhalb des Gehäuses, vor einer Gehäuserückwand angeordnet ist. Diese Anordnung baut jedoch verhältnismäßig groß.

Die US 5,617,303 beschreibt einen Fahrtrichtungsanzeiger für Zweiräder mit einer in einem Gehäuse angeordneten Leuchte, die durch eine Fensteröffnung des Gehäuses entlang einer Hauptöffnungsrichtung nach außen leuchten kann und die über eine Fassung, mit welcher ein elektrischer Anschluss zwischen der Leuchte und Zuleitungskabeln gehäuseseitig realisierbar ist, in ihrer Position gehalten wird, wobei die Leuchte senkrecht zur Hauptöffnungsrichtung angeordnet ist. Bei dieser Anordnung ist jedoch ein Leuchtenwechsel verhältnismäßig aufwendig.

Sowohl die FR 2 608 733 als auch die DE 30 35 005 A1 offenbaren Fahrtrichtungsanzeiger, insbesondere für Motorräder, mit einer in einem Gehäuse angeordneten Leuchte, die durch eine Fensteröffnung des Gehäuses nach außen leuchten kann, welche durch ein optisch aktives Glas verschlossen ist, und mit einem in dem Gehäuse angeordneten Spiegel, wobei das Glas wenigstens zwei fresnellsche Bereiche aufweist. Diese Anordnungen sind jedoch, insbesondere hinsichtlich der fresnellschen Bereiche, äußerst komplex und insbesondere bei kleinen Baugrößen, speziell, wenn die Spiegelfläche klein im Verhältnis zur Leuchtengröße ausgebildet ist, nicht geeignet beherrschbar.

Prinzipiell sind insbesondere Motorradfahrer daran interessiert, ein Motorrad in seiner ursprünglichen, archaischen Form nutzen zu können. Leider zählen zu dieser Form Blinker bzw. Fahrtrichtungsanzeiger nicht.

Aus diesem Grunde ist es Aufgabe vorliegender Erfindung, einen vorbeschriebenen Fahrtrichtungsanzeiger bereitzustellen, der möglichst klein, und somit verhältnismäßig unauffällig, baut.

Als eine erste Lösung schlägt die Erfindung einen Fahrtrichtungsanzeiger mit einer in einem Gehäuse angeordneten Leuchte, die durch eine Fensteröffnung des Gehäuses nach außen leuchten kann, und mit einem der Fensteröffnung gegenüberliegend angeordnetem Spiegel mit einer Spiegelkrümmung vor, bei welchem die Gehäuseinnenseite auf Höhe des Spiegels eine Krümmung aufweist, die der Spiegelkrümmung entspricht.

Auf diese Weise kann auf zusätzliche Baugruppen, die eine Spiegelkrümmung bewerkstelligen, verzichtet werden. Da derartige zusätzliche Baugruppen Bauraum benötigen, baut ein erfindungsgemäßer Fahrtrichtungsanzeiger somit kleiner. Darüber hinaus bedingt die erfindungsgemäße Anordnung, dass der Fahrtrichtungsanzeiger verhältnismäßig kostengünstig herstellbar ist, da Kosten für derartige zusätzliche Baugruppen vermieden werden können.

Vorzugsweise ist die Krümmung der Gehäuseinnenseite auf Höhe des Spiegels der Spiegelkrümmung identisch ausgestaltet. Insbesondere kann die Gehäuseinnenseite den Spiegel selbst bilden. Hierbei kann die notwendige Spiegelfläche durch Aufdampfen, Polieren oder ähnlichen Behandlungen der Gehäuseinnenseite erfolgen. Andererseits kann aber auch eine spiegelnde Folie an der Gehäuseinnenseite aufgelegt, aufgebracht bzw. aufgeklebt werden.

Erfindungsgemäß wird somit die Spiegelkrümmung durch die Gehäusekrümmung auf Höhe des Spiegels definiert, während die eigentliche Verspiegelung durch alle geeigneten Maßnahmen, wie sie beispielsweise vorstehend aufgeführt sind, bereitgestellt werden kann.

Wird das Gehäuse sehr klein ausgebildet, kommt es notgedrungen verhältnismäßig dicht an die Leuchte. Besonders wenn eine verhältnismäßig hochtemperierte Leuchte Verwendung findet, unterliegt das Gehäuse einer sehr hohen thermischen Beanspruchung. Um eine möglichst gleichförmige Wärmeverteilung und somit eine verminderte Temperaturbeanspruchung zu gewährleisten, kann das Gehäuse bis auf eine Halterung im Wesentlichen ellipsenförmig, insbesonders ellipsoidförmig, ausgebildet sein. Hierbei bezeichnet der Begriff ellipsenförmig die Tatsache, dass das Gehäuse wenigstens in einer Schnittebene zwei Hauptachsen unterschiedlicher Länge sowie stetige Übergänge erster Ordnung aufweisen soll. Stetige Übergänge erster Ordnung bedeuten, dass das Gehäuse fließende Übergänge aufweist, wobei sich die in dem Gehäuse anliegenden Tangenzialebenen benachbarter, ebenfalls stetig in ihrem Neigungswinkel zueinander unterscheiden. Es versteht sich, dass dieses nicht unbedingt in Reinform umgesetzt werden muss, sondern dass auch Annäherungen an eine Ellipsoidform, beispielsweise durch Kreissegmente. Polygonzüge oder durch an Spanten ausgerichtete Splines, zu den erfindungsgemäßen Vorteilen führen.

Um den Wärmeeintrag in das Gehäuse und auf diese Weise die thermische Beanspruchung möglichst gleichförmig zu verteilen, kann das Gehäuse bis auf die Halterung außerhalb eines Inneren Erzeugendenellipsoid und innerhalb eines äußeren Erzeugendenellipsoid ausgebildet sein. Hierbei weist das inneren Erzeugendenellipsoid vorzugsweise mindestens 1,02-mal so große Hauptachsen wie Hauptachsen der Leuchte und/oder das äußeren Erzeugendenellipsoid weniger als 3,5-mal so große Hauptachsen wie Hauptachsen der Leuchte auf. Auf diese Weise kann der Wärmeeintrag verhältnismäßig gleichförmig auf das Gehäuse verteilt werden, so dass keine zu großen thermischen Singularitäten auftreten.

Hierbei beschreibt der Begriff der Hauptachsen der Leuchte drei aufeinander senkrecht stehende Achsen, von denen eine Achse eine in die Leuchtenfassung hineinragende Symmetrieachse der Leuchte bzw. des Leuchtenkörpers darstellt. Sämtliche Hauptachsen der Leuchte schneiden dieselbe an ihrem jeweiligen größten Durchmesser und sind derart gebildet, dass ihr Schnittpunkt jede der Hauptachsen in zwei gleich große Hälften teilt. Das heißt, es ist möglich, dass eine Hälfte einer Hauptachse auch über den Leuchtenkörper selbst hinausragt. Insbesondere können selbstverständlich eine der Hauptachsen bzw. bei geeigneter Symmetrie auch zwei Hauptachsen oder alle Hauptachsen einem Durchmesser der Leuchte entsprechen. Da lediglich der Leuchtenkörper an der Wärmeerzeugung beteiligt ist, ist diese Definition ohne eine eventuelle Halterung bzw. elektrische Anschlüsse zu verstehen.

Auch kann wenigstens eine der Erzeugendenellipsoiden ein Verhältnis zwischen der längsten Hauptachse und der kürzesten Hauptachse zwischen 2 und 4, vorzugsweise zwischen 2,2 und 3,5, aufweisen. Auch hierdurch lassen sich, und gegebenenfalls auch unabhängig von den Längenverhältnissen der Hauptachsen des entsprechenden Erzeugendenellipsoids zu der jeweiligen Hauptachse der Leuchte, thermische Singularitäten vermeiden bzw. in ihren Auswirkzungen minimieren.

Es versteht sich, dass eine gute Temperaturverteilung je nach konkreten Anforderungen auch schon erreicht werden kann, wenn die vorbeschriebenen Größenverhältnisse lediglich in einem Schnitt durch das Gehäuse realisiert sind. Insbesondere ist es nicht notwendig, das ein Glas oder ein sonstiges durchscheinendes Material, welches eine Fensteröffnung verschließt, an diese Bedingungen angepasst ist.

Weist das Gehäuse einen Fortsatz als Halterung auf, der an einer Wendelinie, dass heißt an einer Linie, an welcher sich die Veränderung nebeneinander liegender, an die Oberfläche angelegter Tangenten in ihrem Vorzeichen ändert, in das Gehäuse übergehen, so bedingt dieses, dass die Wärme in besonders geeigneter Weise über die Halterung abgeführt werden kann. Auf diese Weise kann darüber hinaus einer übermäßigen Temperaturerhöhung entgegengewirkt werden.

Die Ableitung der von der Leuchte in das Gehäuse eingebrachten Wärmeenergie kann darüber hinaus verbessert werden, wenn die Halterung und das Gehäuse einstückig ausgebildet sind.

Wegen der hohen thermischen Belastbarkeit sowie der guten Wärmeleitfähigkeit kann das Gehäuse aus einem Metall gebildet sein.

Ebenso können keramische Werkstoffe, Faserverbundwerkstoffe, Kunststoffe und/oder Sinterwerkstoffe zur Anwendung kommen, um insbesondere den thermischen Anforderungen zu genügen. Hierbei können, je nach konkreter Ausgestaltung, auch Materialien mit schlechten Wärmeleiteigenschaften genutzt werden, wenn diese den hohen thermischen Beanspruchungen, wie keramische Werkstoffe oder Sinterwerkstoffe, standhalten können, wodurch die Temperatur an der Außenseite des Gehäuses in vorteilhafter Weise gesenkt werden kann. Als Kunststoff kommen insbesondere temperaturbeständige Thermoplasten gewählt werden, der Schmelzpunkt auf die in dem Fahrtrichtungsanzeiger herrschenden Temperaturen abgestimmt ist. Die Kunststoffe können auch mit Graphit armiert werden. Auch durch Faserverbundwerkstoffe kann hohen Temperaturen, wie sie bei einem erfindungsgemäßen Fahrtrichtungsanzeiger auftreten, erfolgreich und auf konstruktiv einfache Weise begegnet werden. Es versteht sich, dass eine derartige Materialwahl auch unabhängig von den übrigen Merkmalen des Fahrtrichtungsanzeigers vorteilhaft ist, um einen Fahrtrichtungsanzeiger zu bauen.

Es versteht sich, dass die vorbeschriebenen Maßnahmen zur Erhöhung der Stabilität des Gehäuses gegen thermische Beanspruchung, insbesondere wenn ein möglichst kleines Gehäuse verwendet werden soll, auch unabhängig von den übrigen Merkmalen eines erfindungsgemäßen Fahrtrichtungsanzeigers vorteilhaft sein können. Dieses gilt insbesondere für die Ellipsenform, die Ausbildung des Gehäuses zwischen zwei Erzeugendenellipsoiden und dem Gehäusefortsatz.

Die Halterung kann ein Anschlussstück aufweisen, mit welchem entsprechende Gegenstücke von verschiedenen Befestigungen verbindbar sind. Hierdurch kann ein modularer Aufbau der Gesamtanordnung aus Gehäuse und Befestigung bereitgestellt werden, so dass ein und dasselbe Gehäuse für verschiedenste Anwendungsfälle, insbesondere an verschiedenste Motorräder, befestigtbar ist. Dementsprechend ist auch eine Baugruppe aus einem erfindungsgemäßen Fahrtrichtungsanzeiger sowie einer Befestigung mit einem dem Anschlussstück entsprechenden Gegenstück vorteilhaft modular einsehbar, da lediglich die Befestigung ausgetauscht werden braucht, wenn der Fahrtrichtungsanzeiger an einer anderen Position bzw. an einem anderem Motorrad oder ähnlichem befestigt werden soll. Ebenso ist ein Bausatz aus einem erfindungsgemäßen Fahrtrichtungsanzeiger und wenigstens zwei Befestigungen mit jeweils dem Anschlussstück des Fahrtrichtungsanzeigers entsprechenden Gegenstücken vorteilhaft. Ein derartiger Bausatz ermöglicht eine Befestigung des hiermit erworbenen Fahrtrichtungsanzeigers an verschiedenen Motorrädern oder ähnlichem, wobei die überzähligen Befestigungen ggf. entsorgt werden können.

Die Fensteröffnung kann einen Öffnungskanal umfassen, dessen Fassungsfläche sich von innen her monoton erweitert. Dieses ermöglicht eine Steckverbindung einer die Fensteröffnung erweiternden Glases, welches dann entsprechend komplementär ausgebildet sein kann. Durch eine derartige monotone Erweiterung von innen heraus kann gewährleistet werden, dass auch Randbereiche des Glases unmittelbar durchleuchtet werden. Hierdurch erfolgt bei kleinster Glasgröße - und mithin bei kleinstmöglicher Größe des gesamten Fahrtrichtungsanzeigers - eine möglichst hohe Lichtausbeute.

In vorliegendem Zusammenhang bezeichnet der Begriff Glas jedes Material, welches zur Abdeckung einer Fensteröffnung unter ausreichender Lichtdurchlässigkeit geeignet ist. Das Glas kann insbesondere auch gefärbt, beispielsweise gelb gefärbt, sein. Es kann darüber hinaus mit Prismen oder ähnlichen optischen Einrichtungen versehen sein, die seine Eignung als Glas für Fahrtrichtungsanzeiger erhöhen.

Insbesondere kann die Fensteröffnung eine umlaufende Fassungsfläche aufweisen, die parallel zur Fensteröffnung ausgerichtet ist. Dieses bedeutet, insbesondere im Zusammenspiel mit einer komplementären Haltefläche des Glases, dass das Glas in die Fensteröffnung eingeschoben werden kann und über die zur Fensteröffnung parallele Fassungsfläche bzw. Haltefläche in der eingeschobenen Position fixiert ist. Durch die Parallelität bezüglich der Fensteröffnung ergibt sich eine verhältnismäßig große Berührungsfläche zwischen Gehäuse und Glas, entlang welcher das Glas lediglich durch Parallelverschiebung entnommen werden kann. Insofern wird das Glas durch eine Reizverbindung, die durch die verhältnismäßig große Fläche entsprechend verhältnismäßig hoch ist, in seiner Position gehalten.

Eine derartige Anordnung zwischen Gehäuse und Glas ermöglicht eine äußerst große Fensteröffnung, da in diese Fensteröffnung keinerlei verengende Baugruppen hineinkragen müssen, die einer Befestigung des Glases dienen.

Alternativ bzw. kumulativ hierzu kann das Glas auch mit dem Gehäuse verrastet sein. Hierdurch lässt sich die Stabilität der Verbindung zwischen Glas und Gehäuse verbessern. Insbesondere im Zusammenspiel mit einer parallelen Fassungsfläche bedingt eine derartige Verrastung nur eine sehr geringe Verminderung des Öffnungsdurchmessers und somit der effektiven Lichtausbeute. Dies ist insbesondere deshalb der Fall, da die parallel zur Fensteröffnung ausgerichtete Fassungsfläche ohnehin an dem Glas anliegt und somit gemeinsam mit dem Glas ohne weiteres mit entsprechenden Mitteln versehen werden kann, um eine derartige Rastverbindung bereitzustellen.

Zwischen der Fensteröffnung und dem Glas kann ein Dichtring mit zur Fensteröffnung senkrecht gerichteter Dichtwirkung vorgesehen sein. Ein derartiger Dichtring sperrt sich senkrecht bezüglich der Fensteröffnung bzw. einer optischen Achsen des Fahrtrichtungsanzeigers gegen das Eindringen von Flüssigkeit bzw. Gasen in den Fahrtrichtungsanzeiger. Dieses bedeutet eine Abkehr von bisher bekannten Dichtungsmaßnahmen, bei welchem die Dichtung jeweils parallel zur Fensteröffnung erfolgt. Während bei bekannten Abdichtungen von Fahrtrichtungsanzeigern die Dichtfläche senkrecht zur Fensteröffnung gerichtet ist und das Glas somit lediglich auf den entsprechenden Dichtring gelegt und anschließend entsprechend befestigt wird, liegt bei dem erfindungsgemäßen Dichtring die Dichtfläche parallel zur Fensteröffnung bzw. der optischen Achse des Fahrtrichtungsanzeigers. Dieses hat zwar den Nachteil, dass beim Öffnen bzw. Verschließen der Fensteröffnung der Dichtring entlang der Fassungsfläche bzw. der komplementären Haltefläche gleiten muss, was zu einer verhältnismäßig hohen Belastung des Dichtrings führt. Da dieses jedoch nur verhältnismäßig selten geschieht, kann dieser Nachteil in Kauf genommen werden.

Der Vorteil eines derartigen, erfindungsgemäßen Dichtrings liegt darin, dass das Glas durch senkrecht zur Fensteröffnung ausgerichtete Kräfte in seiner Position gehalten wird und somit eine maximal mögliche Fensteröffnung bzw. eine maximal mögliche Lichtausbeute gewährleistet werden kann. Darüber hinaus erfüllt der Dichtring bei einer derartigen Anordnung eine Haltefunktion, so dass auf weitere Maßnahmen zur Halterung des Glases verzichtet werden kann. Dieses vereinfacht einerseits den Aufbau und reduziert andererseits entsprechend die Kosten.

Ein derartiger Dichtring kann beispielsweise in einer Nut, die in einer, vorzugsweise parallel zur Fensteröffnung ausgerichteten, Fassungsfläche des Gehäuses und / oder einer komplementären Haltefläche des Glases vorgesehen ist, angeordnet sein.

Es versteht sich, dass die vorbeschriebene Fassungsfläche, die vorbeschriebene Haltefläche sowie der Dichtung mit zur Fensteröffnung senkrecht gerichteter Dichtwirkung auch für sich genommen, unabhängig von den übrigen Merkmalen des Fahrtrichtungsanzeigers vorteilhaft Verwendung finden können, wenn ein derartiger Fahrtrichtungsanzeiger möglichst klein bei möglichst großer Lichtausbeute ausgestaltet werden soll.

Ein leichtes Auswechseln der Leuchte bei minimalem baulichen Aufwand kann dadurch gewährleistet werden, dass die Leuchte in einer Fassung gelagert ist, die durch die Fensteröffnung hindurch dem Gehäuse entnehmbar ist. Insbesondere kann die Fassung senkrecht zur Fensteröffnung sowie in das Gehäuse hinein durch eine Formschlussverbindung mit dem Gehäuse verbunden sein, so dass die Fassung ohne weiteres in das Gehäuse eingesetzt bzw. diesem entnommen werden kann. Hierbei wird die Fassung in diesem Formschluss durch das Glas gesichert. Eine derartige Lagefixierung für die Leuchte ist verhältnismäßig einfach im Aufbau und kann im Gehäuse, da sie lediglich durch parallel zur Fensteröffnung gerichtete Baugruppen bereitgestellt werden kann, durch radial von außen in das Fenster eingreifende Maßnahmen, wie Gussformen oder Fräser, ohne weiteres bereitgestellt werden kann. Es versteht sich, dass eine derartige Lagerung der Leuchte auch für sich genommen vorteilhaft verwendbar ist.

Dementsprechend schlägt die Erfindung als zweite Lösung einen Fahrtrichtungsanzeiger mit einer in einem Gehäuse angeordneten Leuchte, die durch eine Fensteröffnung des Gehäuses entlang einer Hauptöffnungsrichtung nach außen leuchten kann, und mit einem Innenraum vor, dessen Wandung einen zylinderförmigen Wandungsbereich aufweist, dessen äußerer Rand durch die Fensteröffnung bestimmt wird und dessen Achse parallel zur Hauptöffnungsrichtung liegt, wobei die gesamte Leuchte innerhalb eines durch den Wandungsbereich definierten, entlang der Wandungszylinderachse verlängerten Zylinders angeordnet ist.

In vorliegendem Zusammenhang beschreibt der Begriff "Zylinder" jede Raumform mit einer Grundfläche die entlang einer Geraden verlagert ist. Vorzugsweise steht diese Gerade senkrecht auf der Grundfläche. Der Rand gestaltet sich hierbei als die umlaufende Kante zwischen zylinderförmigem Wandungsbereich und Gehäuseaußenseite aus.

Eine derartige Anordnung baut außerordentlich klein und ermöglich es dennoch, dass möglichst viel des erzeugten Lichts geeignet genutzt werden kann. Darüber hinaus kann die Leuchte dann unmittelbar durch die Fensteröffnung entnommen werden, so dass auf zusätzliche, Platz benötigende Einrichtungen verzichtet werden kann.

Die Anordnung eignet sich insbesondere für Suffetten, die keine eigene Fassung aufweisen, kann jedoch auch für Leuchten mit einer Leuchtenfassung zur Anwendung kommen. Bei letzteren Anordnungen ist die Leuchtenfassung vorzugsweise ebenfalls in dem entlang der Wandungszylinderachse verlängerten Zylinder angeordnet. Ebenso ist es denkbar, eine Fassung, mit welcher der elektrische Anschluss zwischen Leuchte und den Zuleitungskabeln gehäuseseitig realisiert und die Leuchte in einer gewünschten Position gehalten wird, innerhalb dieses entlang der Wandungszylinderachse verlängerten Zylinders angeordnet ist, so dass auch diese ohne weiteres durch die Fensteröffnung entnommen und die Leuchte ausgewechselt werden kann.

Vorzugsweise ist die Leuchte senkrecht zur Hauptöffnungsrichtung angeordnet. Diese hat den Vorteil, dass bei gleichem Bauraum eine größere Fensteröffnung zur Verfügung steht, wodurch die Lichtausbeute bezüglich des Bauraumes weiter erhöht wird.

Als dritte Lösung schlägt die Erfindung einen Fahrtrichtungsanzeiger mit einer in einem Gehäuse angeordneten Leuchte vor, die durch eine Fensteröffnung des Gehäuses nach außen leuchten kann, welche durch ein optisch aktives Glas verschlossen ist, wobei das Glas wenigstens zwei fresnellsche Bereiche aufweist. Hierbei wird unter einem fresnellschen Bereich ein optischer Bereich eines Glases verstanden, der im Zusammenspiel mit einem anderen optischen Bereich ein optisches Verhalten aufweist, dass dem optischen Verhalten einer einzigen Baugruppe mit einer größeren Wandstärke als der Wandstärke des Glases entspricht.

Derartige fresnellsche Bereiche sind auf dem Gebiet der Leuchten insbesondere unter dem Begriff der Fresnellschen Linse bekannt. Auf dem Gebiet der Fahrtrichtungsanzeiger ermöglichen derartige Leuchten jedoch erste Mals eine erhebliche Größenreduktion, da hierdurch in völlig neuartiger Weise ermöglicht wird, von einer Blinkleuchte eines Fahrtrichtungsanzeigers ausgehendes Licht unmittelbar, ohne weitere optische Hilfsmittel gerichtet abzustrahlen.

Diese Anordnung eignet sich insbesondere für Fahrtrichtungsanzeiger, bei denen das Licht der Leuchte über einen Spiegel reflektiert abgestrahlt wird. Durch eine derartige Anordnung wird es nämlich möglich, das von dem Spiegel in der Regel durch die Leuchte hindurch abgestrahlte Licht, welches hierdurch naturgemäß abgeschwächt wurde, lediglich als Hintergrundlicht zu nutzen, während das direkt abgestrahlte Licht durch die fresnellschen Bereiche entsprechend gereichtet wird. Dieses bedeutet eine Abkehr von bekannten Blinkerformen, bei welchen durch einen rückwärtigen Spiegel ein gerichteter Lichtstrahl erzeugt und durch ein Streuglas entsprechend gestreut wurde. Dadurch, dass bei dieser Lösung das direkte Licht in gerichteter Weise genutzt wird, ist die Lichtausbeute hinsichtlich des gerichteten Lichtstrahls bei gleicher Baugröße bzw. bei gleicher elektrischer Leistung wesentlich höher als dieses bei bekannten Anordnungen der Fall ist.

Es versteht sich, dass in vorliegendem Zusammenhang der Begriff "Glas" jedes optisch durchscheinende Medium, welches ein Gehäuse abschließen kann, umfasst.

Vorzugsweise sind die fresnellschen Bereiche linienförmig ausgebildet. Dieses vereinfacht einerseits die Herstellung, da eine entsprechende Form leichter bereitzustellen bzw. zu berechnen ist. Darüber hinaus kann durch eine derartige Ausgestaltung die Grundsymmetrie der Gesamtanordnung, dass eine Lichtquelle hinter einem Glas angeordnet ist, einfach in entsprechender Weise umgesetzt werden. Dementsprechend ist es vorteilhaft, wenn die linienförmigen fresnellschen Bereiche gekrümmt ausgebildet sind, wobei die Krümmung vorzugsweise um eine durch eine Lichtquelle, wie eine Glühwendel oder ein Plasmabogen, der Leuchte verlaufende, parallel zu einer Hauptöffnungsrichtung der Fensteröffnung ausgerichteten Gerade erfolgt.

Es versteht sich hierbei, dass die Krümmung nicht zwingend kreisförmig ausgestaltet sein muss. Je nach Anforderungen kann auch ein einfacher Winkel ausreichen. Ebenso sind auch komplexere Bahnen, wie Ellipsen oder ähnliches, denkbar, um ein geeignetes Abstrahlverhalten zu erzielen.

Wenigstens ein fresnellscher Bereich kann wenigstens eine optisch aktive Oberfläche aufweist, die senkrecht zu der Linie eben ausgebildet ist. Ein derartige Anordnung lässt sich einerseits einfach berechnen und bedingt andererseits einen prismatischen Bereich, der eine leichte Auffächerung der Lichtstrahlen bedingt, was für eine gleichmäßige Ausleuchtung von Vorteil ist. Vorzugsweise weist der fresnellsche Bereich zwei optisch aktive Oberflächen auf, wodurch an beiden Flächen der Vorteil eines prismatischen Querschnitts genutzt werden kann.

Wenn zumindest ein fresnellscher Bereich sowohl reflektierend als auch brechend unmittelbar von der Leuchte ausgehendes Licht in eine Hauptstrahlrichtung ablenkt, kann die Gesamtanordnung verhältnismäßig effektiv das von der Lichtquelle ausgehende Licht nutzten. Ebensolches ist kumulativ oder alternativ möelich, wenn zumindest ein erster fresnellscher Bereich unmittelbar von der Leuchte ausgehendes Licht in eine Hauptstrahlrichtung reflektierend und der zweite fresnellsche Bereich unmittelbar von der Leuchte ausgehendes Licht in eine Hauptstrahlrichtung brechend ablenkt.

Vorzugsweise sind die fresnellschen Bereiche in ihren optischen Eigenschaften bezüglich der Leuchtquelle ausgerichtet, wodurch unmittelbar gewährleistet ist, dass direkt von der Leuchtquelle auf das Glas strahlendes Licht in der gewünschten Weise abgelenkt wird. Insbesondere kann das Glas derart ausgestaltet sein, das von der Leuchtquelle ausgehendes Licht, welches unmittelbar auf das Glas fällt, in einem Winkel von beispielsweise 15° zur Hauptachse des Fahrtrichtungsanzeigers leicht aufgefächert abgestrahlt wird. Den drei Lösungsvorschlägen liegt somit die gemeinsame erfinderische Idee zugrunde, bei einem Fahrtrichtungsanzeiger, insbesondere wenn dieser lediglich eine Abstrahlrichtung aufweist, einen direkten Strahlengang von der Leuchtquelle primär für die Gestaltung des abgestrahlten Lichtes zu nutzen, um diesen äußerst klein auszugestalten. Hierdurch werden die Anforderungen an die spiegelnden und fokussierenden Eigenschaften des Spiegels geringer, so dass dieser ohne weiteres einstückig mit dem Gehäuse ausgebildet werden kann. Ebenso bedingt diese Grundidee, dass die Fensteröffnung der Größe des Leuchte angepasst wird, um so durch die fresnellschen Bereiche eine optimale Lichtausbeute bei kleinstmöglicher Gehäusegröße zu erreichen.

Der thermischen Problematik lässt sich ebenso begegnen, wenn als Leuchte wenigstens eine Diode oder eine Vielzahl von Dioden zur Anwendung kommen. Diese haben den Vorteil, dass sie äußerste kurze Schaltzeiten haben, so dass die Leuchtdauer während des Blinkens verhältnismäßig kurz gewählt werden kann, ohne die Gesamtlichtleistung zu beeinträchtigen. Dieses bedingt, dass die Erwärmung verhältnismäßig gering ist. Darüber hinaus haben Leuchtdioden den Vorteil, dass sie ihr Licht unter geringer Erwärmung erzeugen, wodurch sich die thermische Belastung weiter verringern lässt. Ebenso ist deren hohe Lebensdauer und deren Stabilität gegen Schaltvorgänge für einen Fahrtrichtungsanzeiger vorteilhaft. Vorteilhaft ist auch der verhältnismäßig geringe Energieverbrauch von Leuchtdioden bei gleicher Leuchtkraft. Insofern versteht es sich, dass die Verwendung von Leuchtdioden insbesondere bei Fahrtrichtungsanzeigern von Zweirädern, bei welchen ohnehin auf ein möglichst großes Leistungs-Gewichts-Verhältnis Wert gelegt wird, auch unabhängig von den übrigen Merkmalen des Fahrtrichtungsanzeigers vorteilhaft ist.

Die Temperatur des Fahrtrichtungsanzeigers kann auch dadurch beherrscht werden, dass an der der Fensteröffnung abgewandten Seite des Gehäuses Kühlrippen vorgesehen sind. Vorzugsweise folgen die Kühlrippen in ihrer äußeren Form der Form des Gehäuses, so dass sich ein formschönes Äußeres ergibt. Darüber hinaus wird hierdurch die Verletzungsgefahr verringert, da keine hervorstehenden Kühlrippen verbleiben. Es versteht sich, dass die Verwendung von Kühlrippen auch unabhängig von den übrigen Merkmalen des Fahrtrichtungsanzeigers vorteilhaft ist, wenn dieser, beispielsweise weil er sehr klein baut, bei hohen Temperaturen betrieben wird.

Kumulativ oder alternative kann das Gehäuse zumindest an seiner der Fensteröffnung abgewandten Seite einen Berührschutz aufweisen, so dass eine Verletzungsgefahr durch heiße Baugruppen, beispielsweise durch das heiße Gehäuse oder durch heiße Kühlrippen verringert wird.

Weitere Vorteile, Ziele und Eigenschaften vorliegender Erfindung werden anhand nachfolgender Beschreibung anliegender Zeichnung verdeutlicht, in welcher beispielhaft ein erfindungsgemäßer Fahrtrichtungsanzeiger dargestellt ist. In der Zeichnung zeigen:
- Figur 1: eine perspektivische Ansicht mit durchscheinenden Höhenlinien eines erfindungsgemäßen Fahrtrichtungsanzeigers,
- Figur 2: den Fahrtrichtungsanzeiger nach Figur 1 im Horizontalschnitt,
- Figur 3: den Fahrtrichtungsanzeiger nach Figuren 1 und 2 im Vertikalschnitt,

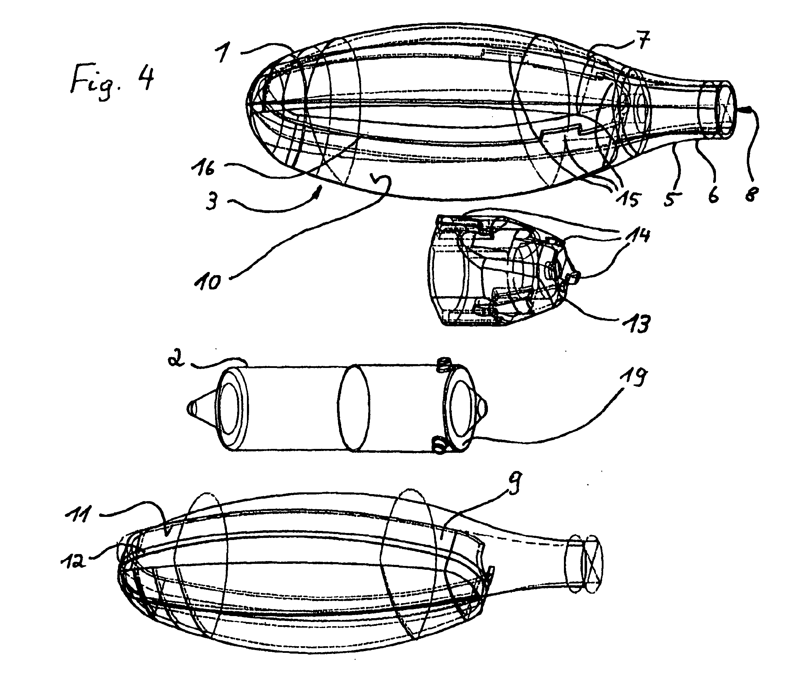

- Figur 4: eine Explosionsdarstellung des Fahrtrichtungsanzeigers nach Figuren 1 bis 3,

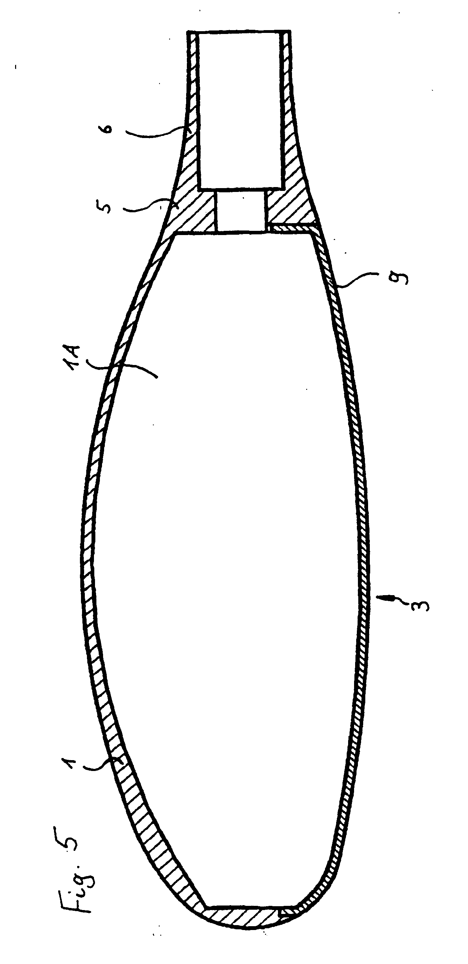

- Figur 5: die Darstellung ähnlich Figur 2. wobei auf Details verzichtet wurde,

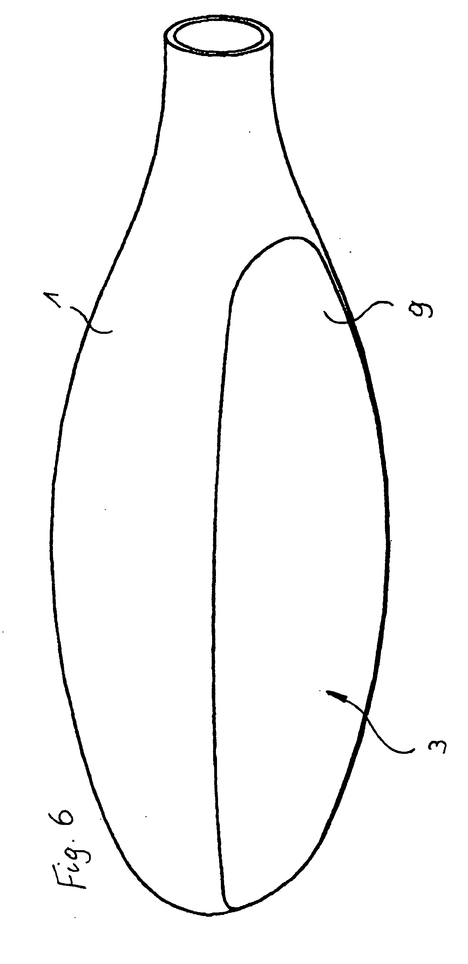

- Figur 6: eine perspektivische Ansicht des Fahrtrichtungsanzeigers
- Figur 7: ein äußeres und ein inneres Erzeugendenellipsoid für eine erste Leuchtengröße,
- Figur 8: ein äußeres und ein inneres Erzeugendenellipsoid für eine zweite Leuchtengröße,
- Figur 9: beispielhaft die Verhältnisse zwischen Gehäuse und den Ellipsoiden nach Figuren 7 und 8,
- Figur 10: ein Glas für einen Fahrtrichtungsanzeiger mit seinen fresnellschen Bereichen.
- Figur 11: einen Fahrtrichtungsanzeiger mit Kühlrippen und
- Figur 12: einen Fahrtrichtungsanzeiger mit einem Berührschutz.

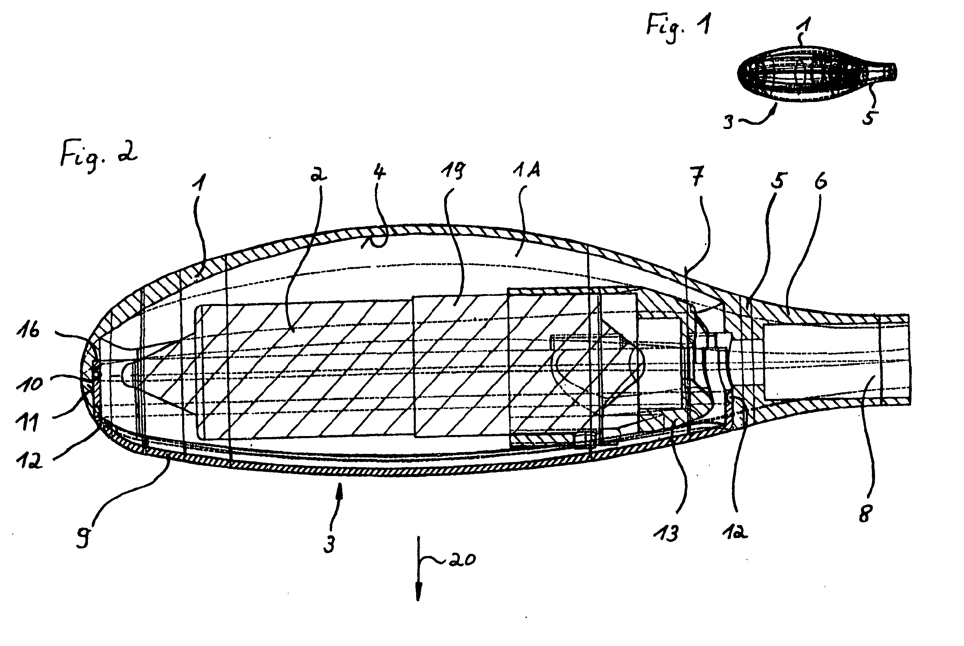

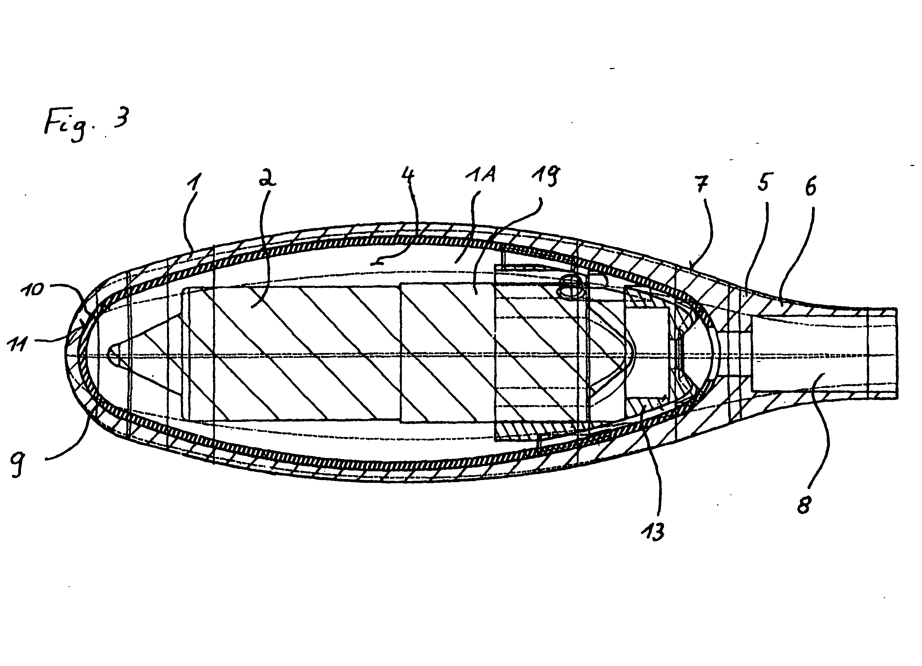

Bei dem in den Figuren dargestellten Fahrtrichtungsanzeiger ist in einem Gehäuse 1 eine Leuchte 2 angeordnet, die durch eine Fensteröffnung 3 nach außen leuchten kann, wobei das Gehäuse 1 einen Innenraum 1A umschließt. Wie insbesondere aus Figur 2 ersichtlich, ist die Gehäuseinnenseite an der der Fensteröffnung 3 gegenüberliegenden Seite des Gehäuses mit einer fokussierenden Krümmung versehen und als Spiegel 4 ausgebildet.

Wie unmittelbar ersichtlich, ist das Gehäuse 1 bis auf eine Halterung 5 im Wesentlichen ellipsenförmig bzw. ellipsoidförmig ausgebildet. Hierbei umfasst die Halterung 5 einen Gehäusefortsatz 6, der von einer Wendelinie 7 aus sich von dem Gehäuse 1 wegweisend erstreckt. Wie unmittelbar ersichtlich sind das Gehäuse 1 und die Halterung 5 bzw. der Gehäusefortsatz 6 einstückig ausgebildet. Insofern reicht das Gehäuse bis in den Gehäusefortsatz 6 hinein.

Die Halterung 5 umfasst des Weiteren ein Anschlussstück 8, welches als zylinderförmige Bohrung als einem nicht dargestellten Schraubgewinde ausegbildet ist. Wie ersichtlich, ist dieses Anschlussstück 8 verhältnismäßig lang ausgebildet und gewährleistet auf diese Weise einen sehr guten Wärmeübergang von dem Gehäuse 1 zu einer Befestigung, die mit diesem Anschlussstück 8 verbunden werden kann.

Die Fensteröffnung 3 ist durch ein Glas 9 aus wärmebeständigem Kunststoff abgedeckt. Dieses Glas ist mittels einer um die Fensteröffnung 3 umlaufenden Fassungsfläche 10, die parallel zur Fensteröffnung 3 ausgerichtet ist, und einer komplementären Haltefläche 11 des Glases 9 an dem Gehäuse 1 befestigt. In der komplementären Haltefläche 11 ist hierbei eine umlaufende Nut mit einem Dichtring 12 vorgesehen.

Die umlaufende Fassungsfläche 10 bildet einen zylinderförmigen Wandungsbereich, dessen Hauptachse parallel zur Öffnungsrichtung 20 der Fensteröffnung 3 ausgerichtet ist. Wird dieser Zylinder entlang der Öffnungsrichtung 20 verlängert, so liegt sowohl die Leuchte 2 als auch deren Leuchtenfassung 19 und eine Fassung 13 innerhalb dieses Zylinders, so dass die Leuchte leicht entnommen bzw, ausgewechselt werden kann. Wie unmittelbar ersichtlich, ist die Leuchtenachse senkrecht zu dieser Hauptöffnungsrichtung 20 angeordnet, wodurch sich die Lichtausbeute erhöht.

Wie aus Figur 2 ersichtlich, ist die Nut in der Haltefläche 11 nicht symmetrisch bezüglich der Haltefläche 11 ausgebildet. Bei Einsetzen des Glases 9 kann somit zunächst das Glas leicht schräg versetzt im Bereich der Halterung 5 eingesetzt werden. Anschließend wird es am gegenüberliegenden Ende eingerastet. Der hierdurch bedingte Einrasteffekt erleichtert eine Montage des Glases 9, bedingt allerdings eine Verkleinerung der Fensteröffnung 3 nicht.

Hinsichtlich der optischen Achse des Fahrtrichtungsanzeigers bzw. hinsichtlich der Fensteröffnung 3 wirkt der Dichtring 12 radial nach außen. Er dient somit gleichzeitig der Halterung des Glases 9 und auch der Abdichtung.

Die Leuchte 2 ist mittels einer Fassung 13 in dem Gehäuse 1 gesichert. Hierzu weist die Fassung 13 Fortsätze 14 auf, die in entsprechende Ausnehmungen des Gehäuses 1 eingreifen. Wird das Glas 9 in das Gehäuse 1 eingeschoben, so gelangt es his zu einem umlaufenden Absatz 16, in welchem die Ausnehmungen 15 derart eingelassen sind, dass die Fortsätze 14 bündig mit dem Absatz 16 abschließen. Auf diese Weise sichert das Glas 9 die Fassung 13 in dem Gehäuse 1.

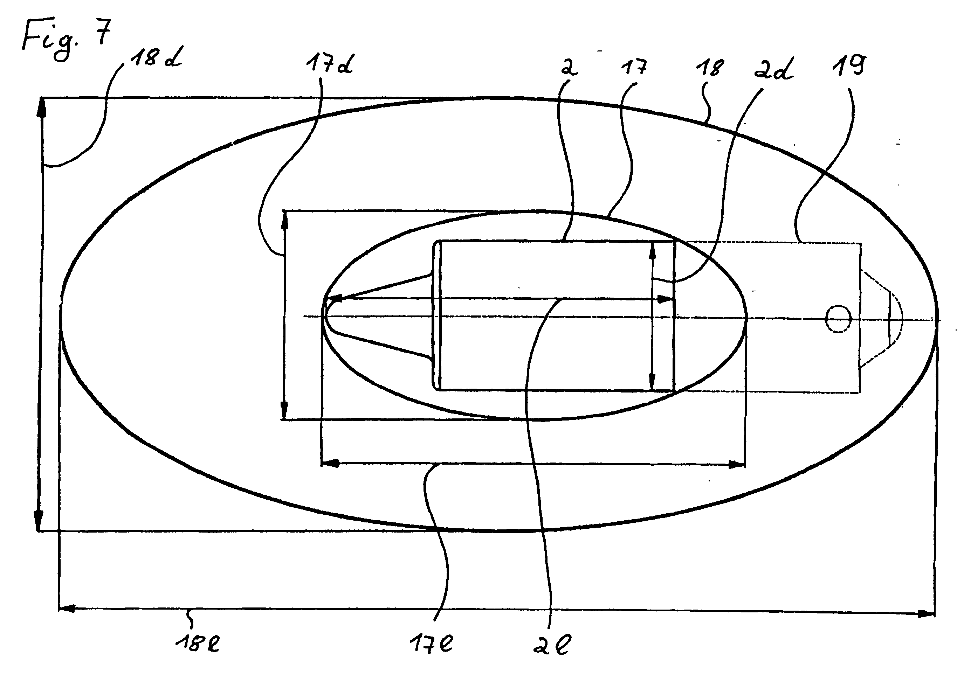

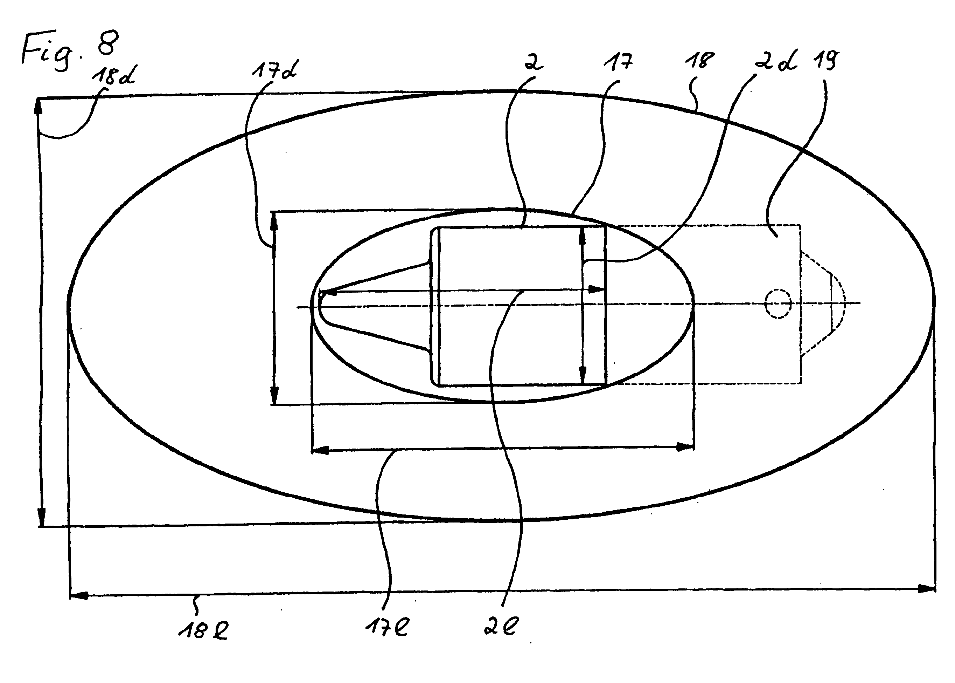

Wie in Figuren 7 und 8 dargestellt, können um die Leuchte 2 jeweils zwei Erzeugendenellipsoide 17, 18, ein inneres Erzeugendenellipsoid 17 und ein äußeres Erzeugendenellipsoid 18, gefegt werden. Jedes dieser Erzeugendenellipsoide 17, 18 weist jeweils drei Hauptachsen (bezeichnet mit 171 bzw. 181 und 17d bzw. 18d) auf, wobei in vorliegenden Ausführungsbeispielen die Erzeugendenellipsoiden wegen der Symmetrie der Leuchten rotationssymmetrisch gewählt sind, so dass die beiden kürzeren Hauptachsen 17d bzw. 18d eine identische Länge aufweisen.

Diese Hauptachsen 171 bzw. 181 und 17d bzw. 18d sind entsprechend der Hauptachsen 21 und 2d der Leuchte 2, sprich entsprechend der Länge 21 und des Durchmessers 2d der Leuchte 2, gewählt, wobei hierbei eine Leuchtenfassung 19 , welche in die Fassung 13 des Fahrtrichtungsanzeigers eingesetzt ist bzw. werden kann, unberücksichtigt bleibt.

Bei dem in Figur 7 dargestellten Ausführungsbeispiel weist die Leuchte 2 eine Länge 21 von l=23mm und einen Durchmesser 2d von d=9mm auf. Das innere Erzeugendenellipsoid 17 weist eine lange Hauptachse 171 von l=28mm und eine kurze Hauptachse 17d von d = 12,5mm auf. Insofern ist die lange Hauptachse 171 ungefähr 1,2 mal so groß wie die Länge 21 der Leuchte 2, während die kurze Hauptachse 17d in etwa 1,4 mal so groß wie der Durchmesser 2d der Leuchte 2 ist. Andererseits weist das äußere Erzeugendenellipsoid 18 eine lange Hauptachse 181 von l=57,5mm und eine kurze Hauptachse 18d von d=26mm auf. Dementsprechend ist bei dem äußeren Erzeugendenellipsoid 18 die lange Hauptachse 181 in etwa 2,5-mal so groß wie die Länge 21 der Leuchte 2, während die kurze Hauptachse 18d in etwa 2,9-mal so groß wie der Durchmesser 2d der Leuchte 2 ist. Die beiden Ellipsoide 17, 18 weisen jeweils ein Verhältnis v zwischen der jeweilig längsten Hauptachse 171, 181 und der jeweilig kürzesten Hauptachse 17d, 18d von 2,24 bzw. 2,21 auf, so dass sich eine möglichst gleichmäßige Temperaturverteilung ergibt.

Bei dem in Figur 8 dargestellten Ausführungsbeispiel weist die Leuchte 2 eine Länge 21 von 1=18mm und einen Durchmesser 2d von d=9mm auf. Das innere Erzeugendenellipsoid 17 weist eine lange Hauptachse 171 von l=24mm und eine kurze Hauptachse 17d von d = 11 mm auf. Insofern ist die lange Hauptachse 171 ungefähr 1,3 mal so groß wie die Länge 21 der Leuchte 2, während die kurze Hauptachse 17d in etwa 1,2 mal so groß wie der Durchmesser 2d der Leuchte 2 ist. Andererseits weist das äußere Erzeugendenellipsoid 18 eine lange Hauptachse 181 von l=54mm und eine kurze Hauptachse 18d von d=24,5mm auf. Dementsprechend ist bei dem äußeren Erzeugendenellipsoid 18 die lange Hauptachse 181 3-mal so groß wie die Länge 21 der Leuchte 2, während die kurze Hauptachse 18d in etwa 2,7 mal so groß wie der Durchmesser 2d der Leuchte 2 ist. Die beiden Ellipsoide 17, 18 weisen jeweils ein Verhältnis v zwischen der jeweilig längsten Hauptachse 171, 181 und der jeweilig kürzesten Hauptachse 17d, 18d von 2,18 bzw. 2,20 auf, so dass sich auch bei dieser Ausführungsform eine möglichst gleichmäßige Temperaturverteilung ergibt.

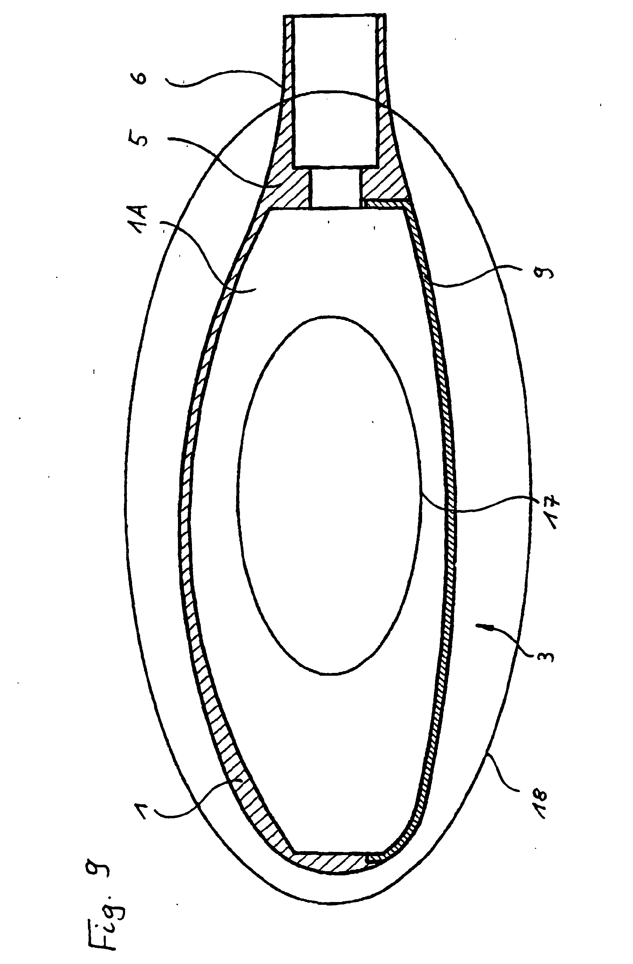

Wie in Figur 9 beispielhaft dargestellt, ist die äußere Wandung des Innenraums 1A bzw. das Gehäuse 1 bis auf den Bereich der Halterung 5 außerhalb des inneren Erzeugendenellipsoids 17 und innerhalb des äußeren Erzeugendenellipsoids 18 angeordnet.

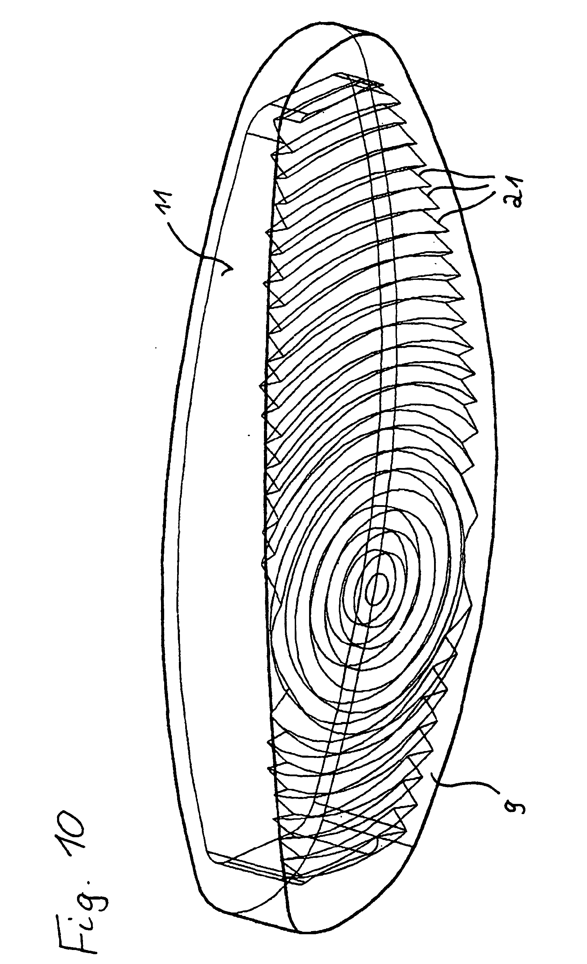

Das in Figur 10 im Einzelnen dargestellt Glas 9 weist prismenartig ausgebildete Bereiche 21 (exemplarisch beziffert) auf, die als fresnellsche Bereiche auf die Leuchtquelle der Leuchte 2 ausgerichtet sind. Jeder dieser Bereiche 21 weist einen prismatischen Querschnitt auf, welcher sich entlang einer Längslinie erstreckt. Diese Längslinie ist jeweils gekrümmt und hinsichtlich der Leuchtquelle ausgerichtet. Während die inneren Bereiche 21 im wesentlichen lichtbrechend wirken, sind die äußeren Bereiche 21 im wesentlichen reflektiv, und zwar totalreflektiv, wirksam.

Bei dem vorliegenden Ausführungsbeispiel sind diese Bereiche 21 in kreisförmigen Linien ausgebildet. Dieses ermöglicht es, einen Formling, der zur Herstellung des Glases 9 genutzt werden soll, mittels drehen herzustellen, was äußerst genau und kostengünstig ist.

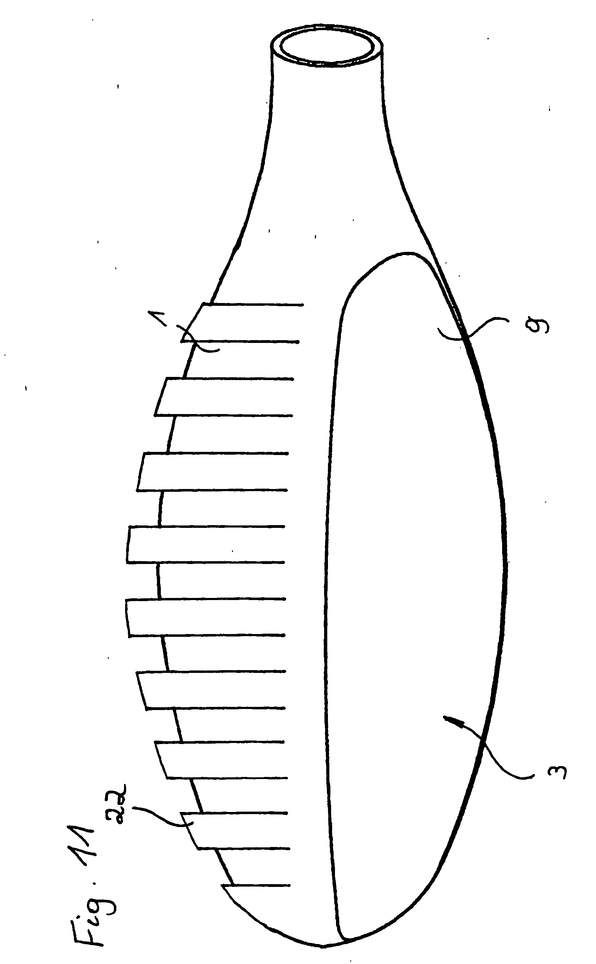

Um das Gehäuse 1 und somit den gesamten Fahrtrichtungsanzeiger gegen zu hohe Temperaturen zu schützen, sind bei der Ausführungsform nach Figur 11 Kühlrippen 22 (exemplarisch beziffert) an der von der Fensteröffnung 3 abgewandten Seite des Gehäuses 1 vorgesehen. Wie ersichtlich, folgt die äußere Form der Kühlrippen 22 der Form des Gehäuses 1. Hierdurch wird einerseits die Verletzungsgefahr verringert und andererseits ein formschönes Äußeres erreicht. Die Ausgestaltung gewährleistet darüber hinaus, dass gerade im thermisch am meisten beanspruchten Mittelbereich des Gehäuses 1 die längsten Kühlrippen 22 vorgesehen sind, wodurch dort auch die beste Kühlung erfolgt und zu großen Temperaturunterschieden begegnet wird.

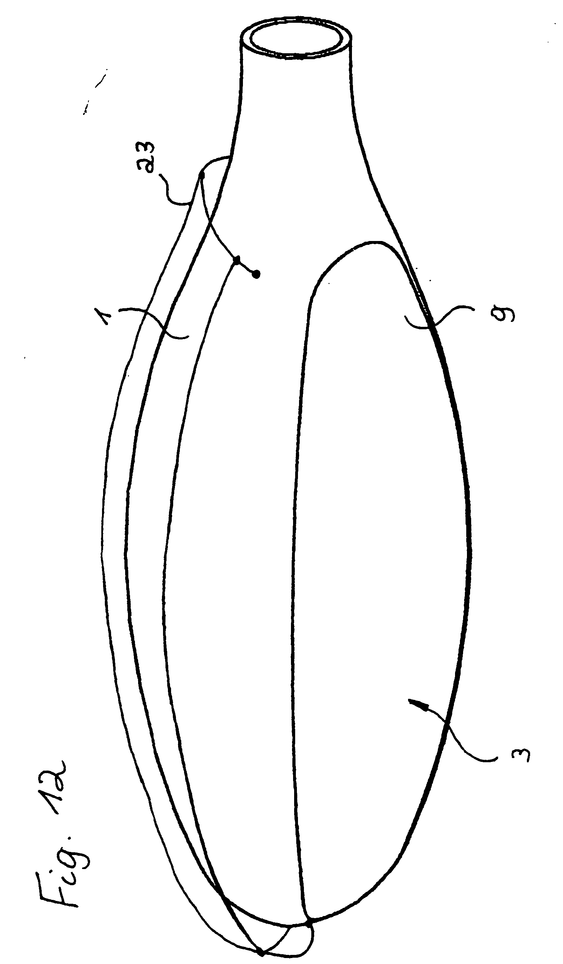

Bei der Ausführungsform nach Figur 12 ist das Gehäuse in seinem von der Fensteröffnung 3 abgewandten Bereich von einem gitterartigen Berührschutz 23 umgeben, wodurch ein Berühren zu heißer Stellen des Gehäuses 1 vermieden werden kann. Es versteht sich, dass ein derartiger Berührschutz 23 auch den gesamten Fahrtrichtungsanzeiger in seinem thermisch belasteten Bereich, als auch die Vorderseite, entsprechend umgeben kann. Es versteht sich, dass der Berührschutz auch durch andere Maßnahmen, wie abstehende Stempel oder eine Isolationsschicht, gewährleistet werden kann.

## Patentansprüche

1. Fahrtrichtungsanzeiger, insbesondere für Motorräder, mit einer in einem Gehäuse (1) angeordneten Leuchte (2), die durch eine Fensteröffnung (3) des Gehäuses (1) nach außen leuchten kann und mittels einer innerhalb des Gehäuses (1) gehaltenen Fassung (13) gesichert ist, und mit einem der Fensteröffnung (3) gegenüberliegend angeordnetem Spiegel (4) mit einer Spiegelkrümmung, ***dadurch gekennzeichnet, dass*** die Gehäuseinnenseite auf Höhe des Spiegels (4) eine Krümmung aufweist, die der Spiegelkrümnnung entspricht, so dass die Gehäusekrümmung die Spiegelkrümmung definiert.

2. Fahrtrichtungsanzeiger nach Anspruch 1, ***dadurch gekennzeichnet, dass*** die Gehäuseinnenseite den Spiegel (4) bildet.

3. Fahrtrichtungsanzeiger nach Anspruch 1 oder 2, ***dadurch gekennzeichnet, dass*** das Gehäuse (1) bis auf eine Halterung (5) im Wesentlichen ellipsenförmig, insbesondere ellipsoidförmig, ausgebildet ist.

4. Fahrtrichtungsanzeiger nach einem der Ansprüche 1 bis 3, ***dadurch gekennzeichnet, dass*** das Gehäuse (1) einen Innenraum (1A) umschließt und die äußere Wandung dieses Innenraums (1A) bis auf den Bereich einer Halterung (5) außerhalb eines inneren Erzeugendenellipsoids (17) ausgebildet ist, wobei das innere Erzeugendenellipsoid (17) mindestens 1,02-mal so große Hauptachsen (171, 17d) wie Hauptachsen (21, 2d) der Leuchte (2) aufweist.

5. Fahrtrichtungsanzeiger nach Anspruch 4, **dadurch gekennzeichnet, dass** das Gehäuse (1) bis auf den Bereich einer Halterung (5) außerhalb des inneren Erzeugendenellipsoids (17) ausgebildet ist.

6. Fahrtrichtungsanzeiger nach einem der Ansprüche 1 bis 5, **dadurch gekennzeichnet, dass** das Gehäuse (1) bis auf einen Halterungsbereich (5) innerhalb eines äußeren Erzeugendenellipsoids (18) ausgebildet ist, wobei das äußere Erzeugendenellipsoid (18) weniger als 3,5-mal so große Hauptachsen (181, 18d) wie die Hauptachsen (21, 2d) der Leuchte (2) aufweist.

7. Fahrtrichtungsanzeiger nach einem der Ansprüche 4 bis 6, **dadurch gekennzeichnet, dass** wenigstens eine der Erzeugendenellipsoiden (17, 18) ein Verhältnis (v) zwischen der längsten Hauptachse (1) und der kürzesten Hauptachse (d) zwischen 2 und 4, vorzugsweise zwischen 2,1 und 3,5, aufweist.

8. Fahrtrichtungsanzeiger nach einem der Ansprüche 1 bis 7, **ge*kennzeichnet durch*** einen Gehäusefortsatz (6) als Halterung (5), der an einer Wendelinie (7) in das Gehäuse (1) übergeht.

9. Fahrtrichtungsanzeiger nach einem der Ansprüche 3 bis 8, ***dadurch gekennzeichnet, dass*** die Halterung (5) und das Gehäuse (1) einstückig ausgebildet sind.

10. Fahrtrichtungsanzeiger nach einem der Ansprüche 3 bis 9, ***dadurch gekennzeichnet, dass*** die Halterung (5) ein Anschlussstück (8) aufweist, mit welchem entsprechende Gegenstücke verschiedener Befestigungen verbindbar sind.

11. Fahrtrichtungsanzeiger nach einem der Ansprüche 1 bis 10, ***dadurch gekennzeichnet, dass*** das Gehäuse (1) metallisch, keramisch, aus Faserverbundwerkstoffen, aus Kunststoffen und/oder aus einem Sintermaterial ist.

12. Fahrtrichtungsanzeiger nach einem der Ansprüche 1 bis 11, ***dadurch gekennzeichnet, dass*** die Fensteröffnung (3) einen Öffnungskanal umfasst, dessen Fassungsfläche (10) sich von innen her monoton erweitert.

13. Fahrtrichtungsanzeiger nach einem der Ansprüche 1 bis 12, ***dadurch gekennzeichnet, dass*** die Fensteröffnung (3) eine umlaufende Fassungsfläche (10) umfasst, die parallel zur Fensteröffnung (3) ausgerichtet ist.

14. Fahrtrichtungsanzeiger nach Anspruch 12 oder 13, ***dadurch gekennzeichnet, dass*** die Fensteröffnung (3) durch ein Glas (9) mit einer zu der Fassungsfläche (10) komplementären Haltefläche (11) abgedeckt ist.

15. Fahrtrichtungsanzeiger nach einem der Ansprüche 1 bis 14, ***dadurch gekennzeichnet, dass*** die Fensteröffnung (3) durch ein Glas (9) abgedeckt ist, welches mit dem Gehäuse (1) verrastet ist.

16. Fahrtrichtungsanzeiger nach einem der Ansprüche 1 bis 15, ***gekennzeichnet durch*** einen Dichtring (12) zwischen Fensteröffnung (3) und einem die Fensteröffnung (3) abdeckenden Glas (9) mit zur Fensteröffnung (3) senkrecht gerichteter Dichtwirkung.

17. Fahrtrichtungsanzeiger nach einem der Ansprüche 1 bis 16, ***dadurch gekennzeichnet, dass*** die Leuchte (2) in einer Fassung (13) gelagert ist, die durch die Fensteröffnung (3) hindurch dem Gehäuse (1) entnehmbar ist.

18. Fahrtrichtungsanzeiger nach Anspruch 17, ***dadurch gekennzeichnet, dass*** die Fassung (13) senkrecht zur Fensteröffnung (3) sowie in das Gehäuse (1) hinein durch eine Formschlussverbindung mit dem Gehäuse (1) verbunden ist und in diesem Formschluss durch das Glas (9) gesichert ist.

19. Fahrtrichtungsanzeiger, insbesondere für Motorräder, mit einer in einem Gehäuse (1) angeordneten Leuchte (2), die durch eine Fensteröffnung (3) des Gehäuses (1) entlang einer Hauptöffnungsrichtung (20) nach außen leuchten kann und die über eine Fassung (13), mit welcher ein elektrischer Anschluss zwischen der Leuchte (2) und Zuleitungskabeln gehäuseseitig realisierbar ist, in ihrer Position gehalten wird, und mit einem Innenraum (1A), dessen Wandung einen zylinderförmigen Wandungsbereich (Fassungsfläche 10) aufweist, dessen äußerer Rand durch die Fensteröffnung (3) bestimmt wird und dessen Achse parallel zur Hauptöffnungsrichtung liegt, wobei die Leuchte (2) senkrecht zur Hauptöffnungsrichtung (20) angeordnet ist, ***dadurch gekennzeichnet, dass*** die gesamte Leuchte (2) einschließlich der Fassung (13) innerhalb eines durch den Wandungsbereich (10) definierten, entlang der Wandungszylinderachse verlängerten Zylinders angeordnet ist.

20. Fahrtrichtungsanzeiger nach Anspruch 19, ***dadurch gekennzeichnet, dass*** die Leuchte (2) eine Leuchtenfassung (19) umfasst, die ebenfalls in dem entlang der Wandungszylinderachse verlängerten Zylinder angeordnet ist.

21. Fahrtrichtungsanzeiger, insbesondere für Motorräder, mit einer in einem Gehäuse (1) angeordneten Leuchte (2), die durch eine Fensteröffnung (3) des Gehäuses (1) nach außen leuchten kann, welche durch ein optisch aktives Glas (9) verschlossen ist, und mit einem in dem Gehäuse (1) angeordneten Spiegel, wobei das Glas (9) wenigstens zwei fresnellsche Bereiche (21) aufweist, ***dadurch gekennzeichnet, dass*** von dem Spiegel abgestrahltes Licht als Hintergrundlicht genutzt und ungerichtet die fresnellschen Bereiche passiert.

22. Fahrtrichtungsanzeiger nach Anspruch 21, **dadurch gekennzeichnet, dass** die fresnellschen Bereiche (21) linienförmig ausgebildet sind.

23. Fahrtrichtungsanzeiger nach Anspruch 22, **dadurch gekennzeichnet, dass** die linienförmigen fresnellschen Bereiche (21) gekrümmt ausgebildet sind.

24. Fahrtrichtungsanzeiger nach Anspruch 23, **dadurch gekennzeichnet, dass** die Krümmung um eine durch eine Lichtquelle der Leuchte (2) verlaufende, parallel zu einer Hauptöffnungsrichtung (20) der Fensteröffnung (3) ausgerichteten Gerade erfolgt.

25. Fahrtrichtungsanzeiger nach einem der Ansprüche 22 bis 24, **dadurch gekennzeichnet, dass** wenigstens ein fresnellscher Bereich (21) wenigstens eine optisch aktive Oberfläche, vorzugsweise zwei optisch aktive Oberflächen, aufweist, die senkrecht zu der Linie eben ausgebildet ist bzw. sind.

26. Fahrtrichtungsanzeiger nach einem der Ansprüche 21 bis 25, **dadurch gekennzeichnet, dass** zumindest ein fresnellscher Bereich (21) sowohl reflektierend als auch brechend unmittelbar von der Leuchte (2) ausgehendes Licht in eine Hauptstrahlrichtung ablenkt.

27. Fahrtrichtungsanzeiger nach einem der Ansprüche 21 bis 26, **dadurch gekennzeichnet, dass** zumindest ein erster fresnellscher Bereich (21) unmittelbar von der Leuchte (2) ausgehendes Licht in eine Hauptstrahlrichtung reflektierend und der zweite fresnellsche Bereich (21) unmittelbar von der Leuchte (2) ausgehendes Licht in eine Hauptstrahlrichtung brechend ablenkt.

28. Fahrtrichtungsanzeiger nach einem der Ansprüche 21 bis 27, **dadurch gekennzeichnet, dass** die fresnellschen Bereiche (21) in ihren optischen Bereichen bezüglich der Leuchtquelle ausgerichtet sind.

29. Fahrtrichtungsanzeiger nach einem der Ansprüche 1 bis 28, **dadurch gekennzeichnet, dass** die Leuchte (2) wenigstens eine Diode umfasst.

30. Fahrtrichtungsanzeiger nach einem der Ansprüche 1 bis 29, **dadurch gekennzeichnet, dass** an der der Fensteröffnung (3) abgewandten Seite des Gehäuses (1) Kühlrippen (22) vorgesehen sind.

31. Fahrtrichtungsanzeiger nach Anspruch 30, **dadurch gekennzeichnet, dass** die Kühlrippen (22) in ihrer äußeren Form der Form des Gehäuses (1) folgen.

32. Fahrtrichtungsanzeiger nach einem der Ansprüche 1 bis 31, **dadurch gekennzeichnet, dass** das Gehäuse (1) zumindest an seiner der Fensteröffnung (3) abgewandten Seite einen Berührschutz (23) aufweist.

## Claims

1. A turn signal, more specifically for motorcycles, with a luminaire (2) that is disposed in a housing (1) and can shine outward through a window aperture (3) of the housing (1) and is secured by means of a holder (13) maintained inside the housing (1), and with a mirror (4) disposed opposite to the window aperture (3) having a mirror figure, ***characterized in that*** the inner side of the housing comprises a curve corresponding to the mirror figure and level with the mirror (4) so that the curve of the housing defines the mirror figure.

2. The turn signal according to claim 1, ***characterized in that*** the inner side of the housing (1) forms the mirror (4).

3. The turn signal according to claim 1 or 2, ***characterized in that*** the housing (1) is substantially configured elliptical, more specifically ellipsoidal, except for a mounting.

4. The turn signal according to one of the claims 1 to 3, ***characterized in that*** the housing (1) encloses an inner volume (1A) and that the outer wall of this inner volume (1A) is configured outside of an inner ellipsoid of revolution (17) except for the region of a mounting (5), the inner ellipsoid of revolution (17) comprising main axes (171, 17d) at least 1,02 times as big as main axes (21, 2d) of the luminaire (2).

5. The turn signal according to claim 4, ***characterized in that*** the housing (1) is configured outside of the inner ellipsoid of revolution (17) except for the region of a mounting (5).

6. The turn signal according to one of the claims 1 to 5, ***characterized in that*** the housing (1) is configured inside the outer ellipsoid of revolution (18) except for a mounting region (5), the outer ellipsoid of revolution (18) comprising main axes (181, 18d) less than 3,5 times as big as the main axes (21, 2d) of the luminaire (2).

7. The turn signal according to one of the claims 4 to 6, ***characterized in that*** the longest main axis (1) and the shortest main axis (d) of at least one of the ellipsoids of revolution have a relation between 2 and 4, preferably between 2,1 and 3,5.

8. The turn signal according to one of the claims 1 to 7, ***characterized by*** an extension (6) to the housing as a mounting (5) that merges into the housing (1) at an inflection line (7).

9. The turn signal according to one of the claims 3 to 8, ***characterized in that*** the mounting (5) and the housing (1) are configured in one piece.

10. The turn signal according to one of the claims 3 to 9, ***characterized in that*** the mounting (5) comprises a connection piece (8) with which corresponding counterparts of different securing members are connectable.

11. The turn signal according to one of the claims 1 to 10, ***characterized in that*** the housing (1) is metallic, ceramic or made of composite fibre materials, plastic materials and/or a sintered material.

12. The turn signal according to one of the claims 1 to 11, ***characterized in that*** the window aperture (3) includes an aperture channel the holder surface (10) of which expands monotonously from inside out.

13. The turn signal according to one of the claims 1 to 12, ***characterized in that*** the window aperture (3) includes a circumferential holder surface (10) that is oriented parallel to the window aperture (3).

14. The turn signal according to one of the claims 12 or 13, ***characterized in that*** the window aperture (3) is covered by a glass (9) having a support surface (11) complementary to the holder surface (10).

15. The turn signal according one of the claims 1 to 14, ***characterized in that*** the window aperture (3) is covered by a glass (9) that is locked with the housing (1).

16. The turn signal according to one of the claims 1 to 15, ***characterized by*** a sealing ring (12) between the window aperture (3) and a glass (9) covering the window aperture (3) having a sealing action oriented perpendicular to the window aperture (3).

17. The turn signal according to one of the claims 1 to 16, ***characterized in that*** the luminaire (2) is borne in a holder (13) that is removable from the housing (1) through the window aperture (3).

18. The turn signal according to claim 17, ***characterized in that*** the holder (13) is connected within the housing (1) to said housing via a positive lock, in such a manner that it is perpendicular to the window aperture (3) and is secured in this positive lock by the glass (9).

19. A turn signal, more specifically for motorcycles, with a luminaire (2) that is disposed in a housing (1) and can shine outward through a window aperture (3) of the housing (1) along a main aperture direction and is maintained in its position via a holder (13) through which an electrical connection between the luminaire (2) and lead wires is made possible on the side of the housing, and with an inner volume (1A) the walls of which comprise a cylindrical wall region (holder surface 10), its outer edge being determined by the window aperture (3) and its axis lying parallel to the main aperture direction, the luminaire (2) being disposed perpendicular to the main aperture direction *(20), **characterized in that*** the entire luminaire (2) including the holder (13) is disposed inside a cylinder defined by the wall region (10) and extending along the cylinder axis of the wall.

20. The turn signal according to claim 19, ***characterized in that*** the luminaire (2) includes a lamp holder ( 19) that is also disposed in the cylinder extending along the cylinder axis of the wall.

21. A turn signal, more specifically for motorcycles, with a luminaire (2) that is disposed in a housing (1) and can shine outward through a window aperture (3) of the housing (1) that is closed by an optically active glass (9) and with a mirror disposed in the housing (1), the glass (9) comprising at least two Fresnel regions, ***characterized in that*** light reflected by the mirror is used as a background light and passes the Fresnel regions without being directed.

22. The turn signal according to claim 21, ***characterized in that*** the Fresnel regions (21) are configured as a line.

23. The turn signal according to claim 22, ***characterized in that*** the Fresnel regions (21) configured as a line are configured to be curved.

24. The turn signal according to claim 23, ***characterized in that*** the curve is configured around a straight line running through a light source of the luminaire (2) and directed parallel to a main aperture direction (20) of the window aperture (3).

25. The turn signal according to one of the claims 22 to 24, ***characterized in that*** at least one Fresnel region (21) comprises at least one optically active surface, preferably two optically active surfaces, that is respectively are configured level and perpendicular to the line.

26. The turn signal according to one of the claims 21 to 25, ***characterized in that*** at least one Fresnel region (21) diffracts light issuing directly from the luminaire (2) as well in a reflecting as in a refracting manner in a main beam direction.

27. The turn signal according to one of the claims 21 to 26, ***characterized in that*** at least a first Fresnel region (21) diffracts the light issuing directly from the luminaire (2) in a reflecting manner in a main beam direction and the second Fresnel region (21) diffracts the light issuing directly from the luminaire (2) in a refracting manner in a main beam direction.

28. The turn signal according to one of the claims 21 to 27, ***characterized in that*** the Fresnel region (21) are oriented with their optical regions relative to the light source.

29. The turn signal according to one of the claims 1 to 28, ***characterized in that*** the luminaire includes at least one diode.

30. The turn signal according to one of the claims 1 to 29, ***characterized in that*** cooling ribs (22) are provided on the side of the housing (1) distal from the window aperture (3).

31. The turn signal according to claim 30, ***characterized in that*** the outer shape of the cooling ribs (22) follows the shape of the housing (1).

32. The turn signal according to one of the claims 1 to 31, ***characterized in that*** the housing (1) comprises a protection (23) against contact at least on its side distal from the window aperture (3)

## Revendications

1. Clignotant, notamment pour deux-roues, avec un luminaire (2) disposé dans un boîtier (1), pouvant briller vers l'extérieur à travers une embrasure de fenêtre (3) du boîtier (1) et étant sécurisé au moyen d'un support (13) maintenu à l'intérieur du boîtier (1) et avec un miroir (4) disposé en regard de l'embrasure de fenêtre et ayant une courbure, ***caractérisé en ce que*** le côté intérieur du boîtier comporte à hauteur du miroir (4) une courbure qui correspond à la courbure du miroir, de manière à ce que la courbure du boîtier définit la courbure du miroir.

2. Clignotant selon la revendication 1, ***caractérisé en ce que*** le côté intérieur du boîtier forme le miroir (4).

3. Clignotant selon la revendication 1 ou 2, ***caractérisé en ce que*** le boîtier (1) est substantiellement conformé elliptique, notamment en forme d'ellipsoïde, excepté un organe de maintien (5).

4. Clignotant selon l'une quelconque des revendications 1 à 3, ***caractérisé en ce que*** le boîtier entoure un espace intérieur (1A) et que la paroi extérieure de cet espace intérieur (1A), excepté la zone dans laquelle se trouve un organe de maintien (5), est conformée en dehors d'un ellipsoïde de révolution (17) intérieur, l'ellipsoïde de révolution intérieur comportant des axes principaux (171, 17d) au moins 1,02 fois plus grands que les axes principaux (21, 2d) du luminaire (2).

5. Clignotant selon la revendication 4, ***caractérisé en ce que*** le boîtier (1) est conformé en dehors de l'ellipsoïde de révolution (17) intérieur, excepté la zone dans laquelle se trouve un organe de maintien (5).

6. Clignotant selon l'une quelconque des revendications 1 à 5, ***caractérisé en ce que*** le boîtier (1), excepté une zone de maintien (5), est conformé à l'intérieur d'un ellipsoïde de révolution (18) extérieur, l'ellipsoïde de révolution extérieur (18) comportant des axes principaux (181, 18d) moins de 3,5 fois plus grands que les axes principaux (21, 2d) du luminaire (2).

7. Clignotant selon l'une quelconque des revendications 4 à 6, ***caractérisé en ce qu'**au* moins l'un des ellipsoïdes de révolution (17, 18) comporte un rapport (v) entre 2 et 4, de préférence entre 2,1 et 3, 5 entre le plus long axe principal (1) et le plus court axe principal (d).

8. Clignotant selon l'une quelconque des revendications 1 à 7, ***caractérisé par*** un prolongement du boîtier (6) en tant qu'organe de maintien (5), la transition entre le prolongement du boîtier et le boîtier (1) se faisant le long d'une ligne d'inflexion (7).

9. Clignotant selon l'une quelconque des revendications 3 à 8, ***caractérisé en ce que*** l'organe de maintien (5) et le boîtier (1) sont conformés solidaires.

10. Clignotant selon l'une quelconque des revendications 3 à 9, ***caractérisé en ce que*** l'organe de maintien (5) comporte un raccord (8) avec lequel des pièces complémentaires correspondantes de différentes fixations sont susceptibles d'être raccordées.

11. Clignotant selon l'une quelconque des revendications 1 à 10, ***caractérisé en ce que*** le boîtier est métallique, céramique, en composite renforcé par des fibres, en matière plastique et/ou en un matériau fritté.

12. Clignotant selon l'une quelconque des revendications 1 à 11, ***caractérisé en ce que*** l'embrasure de fenêtre (3) comprend un canal dont la surface de support (10) s'étend monotone de l'intérieur.

13. Clignotant selon l'une quelconque des revendications 1 à 12, ***caractérisé en ce que*** l'embrasure de fenêtre (3) comprend une surface de support (10) circonférentielle, orientée parallèlement à l'embrasure de fenêtre (3).

14. Clignotant selon la revendication 12 ou 13, ***caractérisé en ce que*** l'embrasure de fenêtre est couverte par un verre avec une surface de retenue (11) complémentaire de la surface de support (10).

15. Clignotant selon l'une quelconque des revendications 1 à 14, ***caractérisé en ce que*** l'embrasure de fenêtre (3) est couverte d'un verre (9) qui est encliqueté dans le boîtier (1).

16. Clignotant selon l'une quelconque des revendications 1 à 15, ***caractérisé par*** un anneau d'étanchéité entre l'embrasure de fenêtre (3) et un verre (9) couvrant l'embrasure de fenêtre (3) avec une étanchéité orientée perpendiculaire à l'embrasure de fenêtre (3).

17. Clignotant selon l'une quelconque des revendications 1 à 16, ***caractérisé en ce que*** le luminaire (2) est monté dans un support (13) susceptible d'être retiré du boîtier (1) à travers l'embrasure de fenêtre (3).

18. Clignotant selon la revendication 17, ***caractérisé en ce que*** le support (13) est connecté au boîtier (1) perpendiculairement à l'embrasure de fenêtre (3) ainsi que vers l'intérieur du boîtier (1) par une liaison à coopération de formes et est maintenu dans cette liaison par un verre (9).

19. Clignotant, notamment pour deux-roues, avec un luminaire (2) disposé dans un boîtier (1), pouvant briller vers l'extérieur à travers une embrasure de fenêtre (3) du boîtier (1) le long d'une direction d'ouverture principale et étant maintenu en position par un support (13) par lequel une connexion électrique entre le luminaire (2) et des câbles d'alimentation est susceptible d'être réalisée du côté du boîtier, et avec un espace intérieur (1A) dont la paroi comporte une zone de paroi cylindrique (surface de support 10) dont le bord extérieur est définit par l'embrasure de fenêtre (3) et dont l'axe est situé parallèlement à la direction d'ouverture principale, le luminaire (2) étant disposé perpendiculairement à la direction d'ouverture principale (20), ***caractérisé en ce que*** l'ensemble du luminaire (2), le support (13) inclut, sont disposés à l'intérieur d'un cylindre définit par la zone de paroi (10) et s'étendant le long de l'axe de cylindre de la paroi.

20. Clignotant selon la revendication 19, ***caractérisé en ce que*** le luminaire (2) comprend une douille de luminaire (19) qui est également disposée dans le cylindre s'étendant le long de l'axe de cylindre de la paroi.

21. Clignotant, notamment pour deux-roues, avec un luminaire (2) disposé dans un boîtier (1), pouvant briller vers l'extérieur à travers une embrasure de fenêtre (3) du boîtier (1), laquelle est fermée par un verre (9) optiquement actif et avec un miroir disposé dans le boîtier (1), le verre (9) comportant au moins deux régions de Fresnel (21), ***caractérisé en ce que*** de la lumière reflétée par le miroir est utilisée comme lumière de fond et passe les régions de Fresnel sans être orientée.

22. Clignotant selon la revendication 21, ***caractérisé en ce que*** les régions de Fresnel (21) sont conformées en forme de ligne.

23. Clignotant selon la revendication 22, ***caractérisé en ce que*** les régions de Fresnel (21) en forme de ligne sont incurvées.

24. Clignotant selon la revendication 23, ***caractérisé en ce que*** la courbure s'effectue autour d'une droite s'étendant à travers une source lumineuse du luminaire (2) et orientée parallèlement à la direction d'ouverture principale (20) de l'embrasure de fenêtre (3).

25. Clignotant selon l'une quelconque des revendications 22 à 24, ***caractérisé en ce qu'**au* moins une région de Fresnel (21) comporte au moins une surface optiquement active, de préférence deux surfaces optiquement actives, qui est/sont conformée(s) plane(s) perpendiculairement à la ligne.

26. Clignotant selon l'une quelconque des revendications 21 à 25, ***caractérisé en ce* qu'**au moins une région de Fresnel (21) dévie de manière réfléchissante ainsi que réfractante de la lumière issue directement du luminaire (2) dans une direction principale de rayonnement.

27. Clignotant selon l'une quelconque des revendications 21 à 26, ***caractérisé en ce qu'**au* moins une première région de Fresnel (21) dévie de manière réfléchissante de la lumière issue directement du luminaire (2) dans une direction principale de rayonnement et que la deuxième région de Fresnel (21) dévie de manière réfractante de la lumière issue directement du luminaire (2) dans une direction principale de rayonnement.

28. Clignotant selon l'une quelconque des revendications 21 à 27, ***caractérisé en ce que*** les régions de Fresnel (21) sont orientées dans leurs zones optiques par rapport de la source lumineuse

29. Clignotant selon l'une quelconque des revendications 21 à 28, ***caractérisé en ce que*** le luminaire (2) comprend au moins une diode.

30. Clignotant selon l'une quelconque des revendications 1 à 29, ***caractérisé en ce que*** des ailettes de refroidissement (22) sont prévues sur le côté du boîtier (1) détourné de l'embrasure de fenêtre (3).

31. Clignotant selon la revendication 30, ***caractérisé en ce que*** la forme extérieure des ailettes de refroidissement (22) suit celle du boîtier (1).

32. Clignotant selon l'une quelconque des revendications 1 à 31, ***caractérisé en ce que*** le boîtier (1) comporte du moins sur son côté opposé à l'embrasure de fenêtre (3) une protection (23) contre les contacts.
